(19) Europäisches Patentamt
European Patent Office
Office européen des brevets

(11) **EP 1 759 759 A1**

(12) **EUROPEAN PATENT APPLICATION**

(43) Date of publication:
**07.03.2007 Bulletin 2007/10**

(51) Int Cl.:
**B01J 19/00** *(2006.01)*          **B01L 3/02** *(2006.01)*

(21) Application number: **06118668.0**

(22) Date of filing: **09.08.2006**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(30) Priority: **12.08.2005 KR 20050074496**

(71) Applicant: **Samsung Electronics Co., Ltd.**
**Suwon-si**
**442-742 Gyeonggi-Do (KR)**

(72) Inventors:
• **Lee, Jeong-gun**
  **Seoul (KR)**
• **Cho, Hye-jung**
  **Gyeonggi-do (KR)**
• **Huh, Nam**
  **Seoul (KR)**
• **Kang, In-seok**
  **Gyeongsangbuk-do (KR)**
• **Lee, Beom-seok**
  **Gyeongsangbuk-do (KR)**

(74) Representative: **Zimmer, Franz-Josef**
**Grünecker, Kinkeldey,**
**Stockmair & Schwanhäusser**
**Anwaltssozietät**
**Maximilianstrasse 58**
**80538 München (DE)**

(54) **Devices and methods for Printing Biomolecular Droplet on Substrate and Device for Printing Ink on Substrate or Print Paper Using Electric Charge Concentration Effect**

(57)    Provided are a device (100) and method for printing biomolecules on a substrate (30) using an electric charge concentration effect. The device (100) enables the limitation of the material and surface characteristics of a substrate (30) to be overcome, enables the accurate dropping of a biomolecular droplet onto a target surface (31) of the substrate, prevents electric discharge, and thus allows the manufacturing of a high density biochip by depositing numerous biomolecular droplets small in size and volume onto a substrate (30). The device including: a needle-shaped electric field forming electrode (20); a substrate (30) that is disposed below the electric field forming electrode (20), is grounded, and includes a target surface (31); and an open circuit type voltage applying unit (50) which supplies first electric charges to the electric field forming electrode so that the biomolecular droplet drops onto the target surface (31) of the substrate.

FIG. 3

**Description**

BACKGROUND OF THE INVENTION

1. Field of the Invention

The present invention relates to a device for printing a biomolecular droplet on a substrate and a device for printing ink on a substrate or a sheet of print paper using an electric charge concentration effect, and more particularly, to a device for printing a biomolecular droplet of a biomolecular material such as nucleic acids (e.g., probe DNA, RNA, PNA, and LNA), proteins (e.g., antigen and antibody), oligopeptides, eukaryotic cells (e.g., human cells, animal cells, and vegetable cells), viruses, and bacteria on a substrate using an electric charge concentration effect by dropping the biomolecular droplet onto a substrate and fixing the biomolecular droplet to the substrate to manufacture a biochip, and a device for printing ink on a sheet of print paper using an electric charge concentration effect by dropping ink onto a sheet of print paper to print contents of computer document files or photographic files.

2. Description of the Related Art

As a result of the epoch-making development of the Human Genome Project, there is an increasing need for methods of rapidly providing a large amount of genetic information for the diagnosis, treatment, and prevention of genetic disorders. Although the Sanger method for analyzing nucleotide sequences has been constantly developed through the development and automation of a polymerase chain reaction (PCR) method, in which DNAs are duplicated, the Sanger method is complex and much time, labor, expense, and expertise are required to perform the method. Thus, a large number of genes cannot be analyzed using the Sanger method. As a result, new systems for analyzing nucleotide sequences are continuously being researched, and in the last several years, there have been advances in many fields relating to the manufacture and application of biochips.

A biochip, that is, a biological microchip, includes a solid substrate which is made of, for example, silicon, surface-modified glass, polypropylene, or activated polyacrylamide and combined with biomolecules such as nucleic acids, proteins, and cells. The biochip can be used to analyze gene developing patterns, genetic defects, protein distribution, or various kinds of reaction patterns.

If a target material to be analyzed is applied to the biochip, the target material hybridizes with probes immobilized on the biochip. The hybridization is optically or radiochemically detected and analyzed to identify the target material. For example, if a fragment of target DNA to be analyzed is applied to the DNA chip (or DNA microarray) having probes, the target DNA complementarily hybridizes with the probes immobilized on the biochip. The hybridization is detected and analyzed using various detecting methods to identify the nucleotide sequence of the target DNA, which is called sequencing by hybridization (SBH).

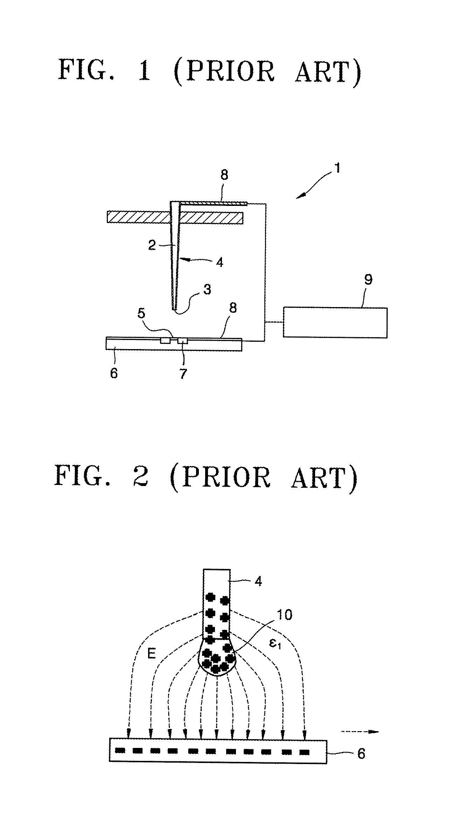

An example of a printing device for manufacturing a biochip or a DNA microarray is disclosed in Korean Patent Laid-Open Publication No. 2005-0040162. FIG. 1 is a cross-sectional view of a conventional printing device 1 for printing a biomolecular droplet onto a substrate 6 using an electro-hydrodynamic (EHD) effect. Referring to FIG. 1, the printing device 1 includes: a first electric field forming electrode 4 that is shaped like a needle, is made of a conductive material, is disposed vertically, and includes: an accommodating area 2 in which a biomolecular droplet 10 such as nucleic acids (e.g., probe DNA, RNA, PNA, and LNA), proteins (e.g., antigen and antibody), oligopeptides, eukaryotic cells (e.g., human cells, animal cells, and vegetable cells), viruses, and bacteria is accommodated; and an outlet 3 formed on a bottom end of the accommodating area 2 through which the biomolecular droplet 10 is discharged; a substrate 6 disposed below the first electric field forming electrode 4, and including a target surface 5 onto which the biomolecular droplet 10 discharged from the outlet 3 of the first electric field forming electrode 4 is deposited; and a second electric field forming electrode 7 made of a conductive material, disposed below the first electric field forming electrode 4, and attached to the substrate 6. A voltage applying device 9 is connected to and applies a voltage to the first and second electric field forming electrodes 4 and 7 via an electrode lead wire 8.

FIG. 2 is a view illustrating an electric field generated when voltage is applied to the printing device 1 illustrated in FIG. 1. Referring to FIG. 2, in the printing device 1, when AC and DC voltages are simultaneously applied between the first and second electric field forming electrodes 4 and 7 by driving the voltage applying unit 9, an electric field is generated between the first and second electric field forming electrodes 4 and 7. An electric force is created toward the biomolecular droplet 10, due to interactions among the electric field generated as described above, the biomolecular droplet 10 having a free surface, and a dielectric constant gradient of the atmosphere/. Accordingly, the biomolecular droplet 10 suspended from the outlet 3 drops onto the target surface 5 of the substrate 6.

However, the printing device 1 can form an electric field between the first electric field forming electrode 4 and the substrate 6 when the substrate 6 is made of a conductive material or the second electric field forming electrode 7 made of a conductive material is attached to the substrate 6, and thus, the electro-hydrodynamic effect can be generated to print the biomolecular droplet 10. Accordingly, the substrate 6 should be made of a conductive material or the surface of the substrate 6 should be conductive.

As illustrated in FIG. 2, an electric field may not be uniformly generated between the first electric field forming electrode 4 and the second electric field forming electrode 7, and thus the biomolecular droplet 10 may not be dropped onto a desired position of the target surface 5.

When the distance between the first electric field forming electrode 4 and the second electric field forming electrode 7 is less than a predetermined distance, an electric discharge can be generated. Since the electric discharge may change the biochemical characteristics, size, and volume of the biomolecular droplet 10, and the surface structure or characteristics of the substrate 6, the distance between the first electric field forming electrode 4 and the second electric field forming electrode 7 should be controlled to prevent the generation of the electric discharge. For example, when the substrate 6 is coated with polymethlymethacrylate (PMMA) and the coating thickness is 5 $\mu$m, the distance between the first electric field forming electrode 4 and the second electric field forming electrode 7 is more than 750 $\mu$m to prevent the generation of the electric discharge. The required distance between the first electric field forming electrode 4 and the second electric field forming electrode 7 limits the device design.

SUMMARY OF THE INVENTION

The present invention provides a device for printing biomolecules on a substrate using an electric charge concentration effect. The device enables the limitation of the material and surface characteristics of a substrate to be overcome, enables the accurate dropping of a biomolecular droplet onto a desired position of a target surface of the substrate, prevents electric discharge, thereby providing more control of the distance between an electric field forming electrode thereof and the substrate, and allows the manufacturing of a high density biochip by depositing numerous biomolecular droplets small in size and volume onto a substrate.

The present invention also provides a device for printing ink onto a sheet of print paper or a print substrate using the electric charge concentration effect which enables accurate printing of contents of computer document files or photographic files or the manufacture of color filters for displays by dropping ink with small size and volume onto a sheet of print paper or a glass substrate for the color filter.

According to an aspect of the present invention, there is provided a device for printing a biomolecular droplet onto a substrate using an electric charge concentration effect, the device including: an electric field forming electrode that is needle-shaped, is made of a conductive material, is disposed vertically, and includes: an accommodating area in which the biomolecular droplet is accommodated; and an outlet formed on a bottom end of the accommodating area through which the biomolecular droplet is discharged; a substrate that is disposed below the electric field forming electrode, is grounded, and includes a target surface onto which the biomolecular droplet discharged from the outlet of the electric field forming electrode is deposited; and an open circuit type voltage applying unit which is electrically connected to the electric field forming electrode and supplies first electric charges to the electric field forming electrode so that the biomolecular droplet drops onto the target surface of the substrate due to the Coulomb force generated by the first electric charges in the electric field forming electrode and second electric charges induced by the first electric charges on the substrate.

The biomolecular droplet may include a biomolecular material selected from the group consisting of nucleic acids, proteins, oligopeptides, saccharides, eukaryotic cells, viruses, and bacteria.

The apparatus may further include a printer body that is disposed above the outlet of the electric field forming electrode and supports the electric field forming electrode.

The apparatus may further include electrode lead wires that are connected to a top end of the electric field forming electrode, and electrically connect the electric field forming electrode and the open circuit type voltage applying unit.

The voltage applying device may simultaneously apply AC and DC voltages to the electric field forming electrode to generate the electric field below the biomolecular droplet suspended from the outlet.

The DC voltage may be in the range of 5 to 100,000 V and the AC voltage may be in the range of 5 to 100,000 V.

The DC voltage may be in the range of 500 to 10,000 V and the AC voltage may be in the range of 500 to 10,000 V.

The AC voltage may have a frequency of 10 to 1,000 Hz.

The DC voltage may be 2,000 V, and the AC voltage may be 500 V and have a frequency of 130 Hz.

The substrate may be made of at least one material selected from the group consisting of silicon, glass, or polymer.

The surface of the substrate may be coated using at least one material selected from the group consisting of an amine group, a carboxyl group, streptavidine, biotin, thiol, and poly-L-lysine such that the biomolecular droplet can be deposited.

The substrate may include: a planar layer; and a plurality of protrusions protruding upwards from the planar layer, wherein each of the protrusions is a target surface of the substrate.

The substrate may be disposed perpendicular to the electric field forming electrode.

The electric field forming electrode may be made of at least one material selected from the group consisting of conductive metals, conductive polymers, and indium-tin oxide glass.

The area around the outlet of the electric field forming electrode may be hydrophobic-treated.

There may be a plurality of the electric field forming electrodes arranged at regular intervals, a plurality of the target surfaces are formed on the substrate, and the target surfaces may have the same pitch as the electric field forming electrodes and respectively correspond to the electric field forming electrodes.

According to another aspect of the present invention, there is provided a method of printing a biomolecular droplet on a substrate using an electric charge concentration effect, the method including: vertically disposing an electric field forming electrode that is needle-shaped, is made of a conductive material, and includes: an accommodating area in which the biomolecular droplet is accommodated; and an outlet formed at a bottom end of the accommodating area through which the biomolecular droplet is discharged; disposing a substrate below the electric field forming electrode, wherein the substrate is grounded and includes a target surface onto which the biomolecular droplet discharged from the outlet of the electric field forming electrode is deposited; disposing an open circuit type voltage applying unit which is electrically to the electric field forming electrode; supplying a biomolecular droplet of a biomolecular material selected from the group consisting of nucleic acids, proteins, oligopeptides, saccharides, eukaryotic cells, viruses, and bacteria to the accommodating area of the electric field forming electrode; and separating the biomolecular droplet when an open circuit type voltage applying unit applies a voltage to the electric field forming electrode so that the biomolecular droplet drops onto the target surface of the substrate due to the Coulomb force generated by first electric charges in the electric field forming electrode and second electric charges induced by the first electric charges in the substrate.

According to another aspect of the present invention, there is provided a device for printing ink on a sheet of print paper or a print substrate using an electric charge concentration effect, the device including: an electric field forming electrode that is needle-shaped, is made of a conductive material, is disposed vertically, and includes: an accommodating area in which the ink is accommodated; and an outlet formed at a bottom end of the accommodating area through which the ink is discharged; the sheet of print paper or the print substrate that is disposed below the electric field forming electrode, is grounded, and includes a target surface onto which the ink discharged from the outlet of the electric field forming electrode is deposited; and an open circuit type voltage applying unit which is electrically connected to the electric field forming electrode and supplies first electric charges to the electric field forming electrode so that the biomolecular droplet drops onto the target surface of the sheet of print paper or the print substrate due to the Coulomb force generated by the first electric charges in the electric field forming electrode and second electric charges induced by the first electric charges in the print paper or the print substrate.

BRIEF DESCRIPTION OF THE DRAWINGS

The above and other features and advantages of the present invention will become more apparent by describing in detail exemplary embodiments thereof with reference to the attached drawings in which:

FIG. 1 is a cross-sectional view of a conventional printing device for printing a biomolecular droplet onto a substrate using an electro-hydrodynamic (EHD) effect;

FIG. 2 is a view illustrating an electric field generated when voltage is applied to the printing device of FIG. 1;

FIG. 3 is a cross-sectional view of a device for printing a biomolecular droplet or ink using an electric charge concentration effect, according to an embodiment of the present invention;

FIG. 4 is a plan view of a substrate illustrated in FIG. 3;

FIG. 5 illustrates the distribution of positive charges in an electric field forming electrode and negative charges induced by the positive charges, and a force applied to a biomolecular droplet suspended from an outlet when a voltage is applied to the printing device of FIG. 3;

FIG. 6 illustrates the process of printing the biomolecular droplet using the device of FIG. 3;

FIG. 7 illustrates surface tension affecting a biomolecular droplet having a neck shape when the biomolecular droplet is dropped onto the substrate in the printing device of FIG. 3;

FIG. 8 is a graph illustrating the volume of a biomolecular droplet deposited on a substrate made of glass or coated using polymethlymethacrylate (PMMA) in the printing device of FIG. 3;

FIG. 9 is a graph illustrating the average volume of a biomolecular droplet deposited on a substrate coated with PMMA and the average time taken to drop the biomolecular droplet ten times in the printing device of FIG. 3;

FIG. 10 is a graph illustrating the relationship between the distance between the electric field forming electrode and the glass substrate and the volume of the biomolecular droplet dropped from the outlet in the printing device of FIG. 3;

FIG. 11 is a cross-sectional view of a device for printing a biomolecular droplet or ink using an electric charge concentration effect, according to another embodiment of the present invention;

FIG. 12 is a cross-sectional view of a device for printing a biomolecular droplet or ink using an electric charge concentration effect, according to another embodiment of the present invention;

FIG. 13 is a schematic view illustrating continuously printing the biomolecular droplet or ink using the device illustrated in FIG. 11;

FIGS. 14A and 14B are photographs illustrating a process of printing a biomolecular droplet using a printing device having a pair of electric field forming electrodes according to an embodiment of the present invention; and

FIG. 15 illustrates printing patterns obtained when blue ink is printed on print paper using the printing device of FIG. 3.

DETAILED DESCRIPTION OF THE INVENTION

Hereinafter, the present invention will be described more fully with reference to the accompanying drawings, in which exemplary embodiments of the invention are shown.

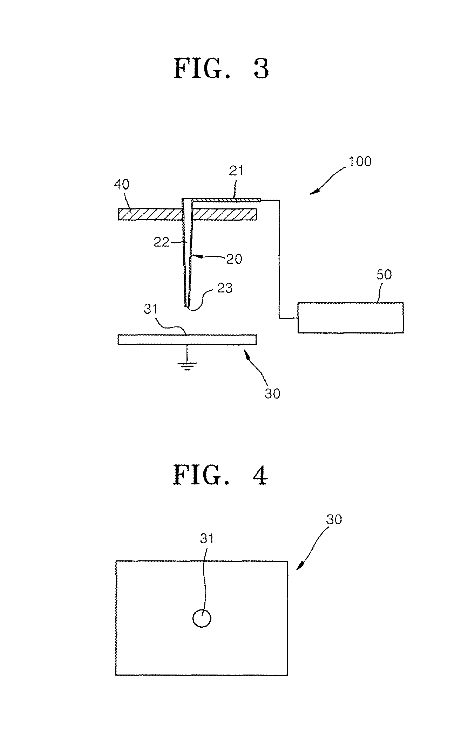

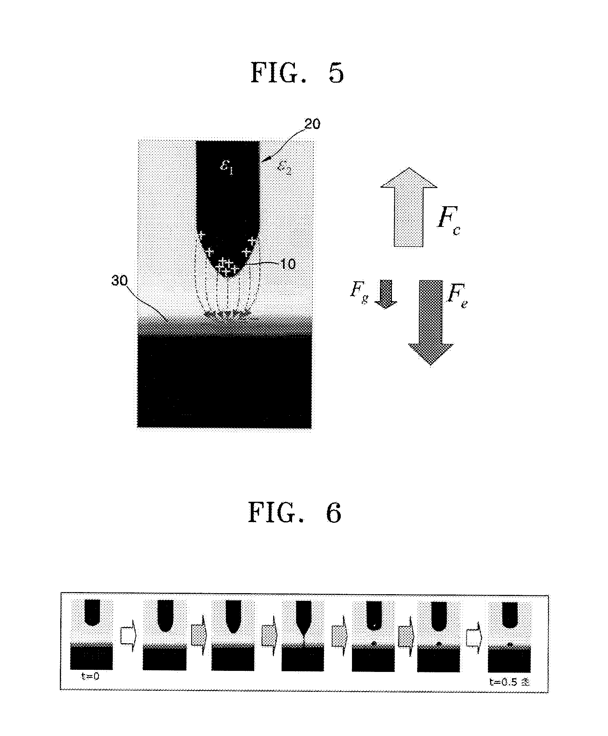

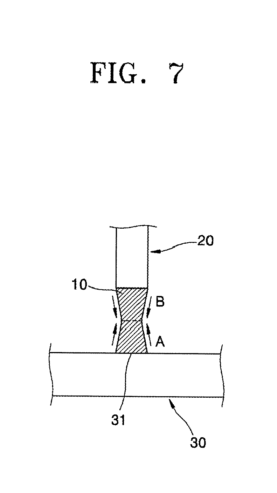

FIG. 3 is a cross-sectional view of a device 100 for printing a biomolecular droplet or ink using an electric charge concentration effect, according to an embodiment of the present invention. FIG. 4 is a plan view of a substrate 30 illustrated in FIG. 3. FIG. 5 illustrates the distribution of positive charges in an electric field forming electrode 20 and negative charges induced by the positive charges, and forces applied to a biomolecular droplet 10 suspended from an outlet 23 when a voltage is applied to the printing device 100 of FIG. 3. FIG. 6 illustrates the process of printing the biomolecular droplet 10 using the device 100 of in FIG. 3. FIG. 7 illustrates surface tension affecting the biomolecular droplet 10 having a neck shape when the biomolecular droplet 10 is dropped onto the substrate 30 in the printing device 100 of FIG. 3

Referring to FIGS. 3 through 7, the device 100 includes an electric field forming electrode 20, the substrate 30, a printer body 40, and an open circuit type voltage applying unit 50.

The electric field forming electrode 20 is made of a conductive material such as gold, platinum, and copper, a conductive polymer, Indium-tin oxide (ITO) glass, carbon nanotubes, or a combination thereof. In the present embodiment, the electric field forming electrode 20 is made of gold. The electric field forming electrode 20 shaped like a needle and extends vertically. An electrode lead wire 21 is connected to a top end of the electric field forming electrode 20. The electric field forming electrode 20 is electrically connected to the open circuit type voltage applying unit 50 via the electrode lead wire 21.

The electric field forming electrode 20 includes an accommodating area 22 and an outlet 23.

The biomolecular droplet 10 such as nucleic acids (e.g., probe DNA, RNA, PNA, and LNA), proteins (e.g., antigen and antibody), oligopeptides, saccharides, eukaryotic cells (e.g., human cells, animal cells, and vegetable cells), viruses, and bacteria is accommodated in the accommodating area 22.

The outlet 23 is formed on the bottom end of the accommodating area 22, and is connected to the accommodating area 22. The inner diameter of the outlet 23 is very small, allowing the surface tension of the biomolecular droplet 10 to suspend the biomolecular droplet 10 in the outlet 23. The biomolecular droplet 10 accommodated in the accommodating area 22 can be discharged from the accommodating area 22 via the outlet 23 by an electric charge concentration effect, which will be described later. The area around the outlet 23 is hydrophobic-treated so that the contact angle between the biomolecular droplet 10 and the surface of the outlet 23 is large enough to prevent the biomolecular droplet 10 from flowing outwards.

The substrate 30 includes a biochip or a microarray, and is made of silicon, glass, polymer, or a combination thereof. In the present embodiment, the substrate 30 is made of silicon. The substrate 30 is substantially perpendicularly disposed below the electric field forming electrode 20, and a target surface 31 is formed on the substrate 30. The biomolecular droplet 10 discharged via the outlet 23 of the electric field forming electrode 20 is dropped and deposited on the target surface 31. The substrate 30 is grounded. The surface of the substrate 30, in particular, the target surface 31 of the substrate 30, is coated using at least one or two material selected from the group consisting of an amine group, a carboxyl group, streptavidine, biotin, thiol, and poly-L-lysine. Accordingly, the biomolecular droplet is satisfactorily deposited onto the surface of the substrate.

The printer body 40 is disposed above the outlet 23 of the electric field forming electrode 20. The printer body 40 supports the electric field forming electrode 20, and is made of polymethlymethacrylate (PMMA). The printer body 40 can be moved three-dimensionally along x-, y-, and z-axes by a separate driving device (not illustrated). The electric field forming electrode 20 supported by the printer body 40 can be moved to be disposed above the target surface 31 and separated from the target surface 31 by a predetermined distance by driving the separate driving device.

The open circuit type voltage applying unit 50 is electrically connected to the electric field forming electrode 20. The open circuit type voltage applying unit 50 can simultaneously apply AC and DC voltages to the electric field forming electrode 20 via the electrode lead wires 21 such that positive charges migrate into the biomolecular droplet 10 suspended from the outlet 23 and negative charges are induced in the substrate 30 due to the positive charges. Accordingly, an electric field is formed between the positive and negative charges, as illustrated in FIG. 5. The biomolecular droplet 10 is dropped onto the target surface 31 of the substrate 30 due to the Coulomb force between the positive and negative charges, as will be described later.

Referring to FIG. 5, when a voltage is applied to the electric field forming electrode 20, forces act on the biomolecular droplet 10 suspended from the outlet 31. The forces are gravity ($F_g$), surface tension ($F_c$), and the Coulomb force ($F_e$) between the positive charges in the biomolecular droplet 10 and the induced negative charges in the substrate 30. The directions of the gravity, the surface tension, and the Coulomb force are illustrated in FIG. 5. The biomolecular droplet 10 is dropped when the gravity, surface tension, and Coulomb forces are in equilibrium according to equation 1.

$$F_g + F_e = F_c \qquad\qquad …… (1)$$

where $F_g = \rho g \square V^{drop}$ ($\rho$ is the density of the biomolecular droplet 10, g is acceleration of gravity, and $\square V^{drop}$ is the volume of the biomolecular droplet 10 suspended from the outlet 23), $F_c = 2\pi R\gamma$ (R is the radius of the outlet 23 and $\gamma$ is a surface tension of the biomolecular droplet 10 per unit length, and $F_e = \rho_f E - E^2 \square \varepsilon/2$ ($\rho_f$ is the free charge of the biomolecular droplet 10, E is the magnitude of the electric field, $\varepsilon$ is the dielectric constant). The electric force is the sum of an electrophoretic force ($\rho_f E$) and a dielectrophoretic force($-E^2 \square \varepsilon/2$).

In equation 1, gravity is proportional to the volume of the biomolecular droplet 10 suspended from the outlet 23, but the volume of the biomolecular droplet is sufficiently small to ignore gravity in equation 1.

Thus, when the Coulomb force becomes greater than the surface tension of the biomolecular droplet 10 suspended from the outlet 23, the equilibrium of the forces is not maintained such that the biomolecular droplet 10 is dropped onto the target surface 31 of the substrate 30. In addition, the charges concentrated in the lower portion of the biomolecular droplet 10 suspended from the outlet 23 induce counter-charges on a portion of the substrate 30 that is mainly directly below the biomolecular droplet 10. Therefore, the Coulomb force is generated between the charges in the biomolecular droplet 10 and the counter-charges in the substrate 30.

Hereinafter, the magnitude of the force required to drop a biomolecular droplet when an electric charge concentration effect is used in the device according to an embodiment of the present invention is compared with that when an electro-hydrodynamic effect is used in a device according to the conventional art illustrated in FIG. 1.

When an electro-hydrodynamic effect is used as illustrated in FIG. 1, the forces have the equilibrium relationship of equation 1. The volume of the biomolecular droplet is sufficiently small to ignore gravity in equation 1. In addition, the dielectrophoretic force component of the Coulomb force is sufficiently small compared with the electrophoretic force to be ignored. The same is true when using the electric charge concentration effect. Accordingly, equation 1 can be simplified to equation 2.

$$\rho_f E \square F_c \qquad\qquad …… (2)$$

When the electrophoretic force is greater than the surface tension, the biomolecular droplet 10 suspended from the outlet 3 is dropped.

As described above, the kinds of forces acting on the biomolecular droplet 10 are very similar for both the electric charge concentration effect and the electro-hydrodynamic effect. However, the magnitude and effective range of the electrophoretic force are difference in these cases. For the use of the electro-hydrodynamic effect, charges are distributed on the entire surface of the biomolecular droplet such that the electrophoretic force uniformly affects the entire surface of the biomolecular droplet. However, for the use of the electric charge concentration effect, charges are concentrated in the bottom portion near the surface of the biomolecular droplet such that a high electrophoretic force acts on this region. Accordingly, when the same voltage is applied, the electrophoretic force in the electric charge concentration effect is a thousand times greater than the electrophoretic force in the electro-hydrodynamic effect. Accordingly, the electric charge concentration effect can be used to drop a smaller biomolecular droplet than the electro-hydrodynamic effect.

The DC voltage is in the range of 5 to 100,000 V and the AC voltage is in the range of 5 to 100,000 V and has a frequency of 10 to 1,000 Hz, and the DC and AC voltages may be simultaneously applied to the electric field forming electrode 20 by the open circuit type voltage applying unit 50. The DC voltage may be in the range of 500 to 10,000 V and the AC voltage may be in the range of 500 to 10,000 V and may have a frequency of 10 to 1,000 Hz. AC and DC voltages and a frequency that are outside of the ranges described above should not be used since an appropriate electric field will not be generated around the biomolecular droplet 10, and thus the biomolecular droplet 10 will not be effectively dropped onto the substrate 30. In the present embodiment, the DC voltage may be 2,000 V, the AC voltage may be 500 V, and the AC voltage may have a frequency of 130 Hz.

An example of a method of printing the biomolecular droplet 10 with the device 100 for printing the biomolecular solution 10 onto the substrate 30 using the electric charge concentration effect will be described in detail with reference to FIG. 6.

First, the driving device is driven to move the printer body 40, which supports the electric field forming electrode 20, above the target surface 31 of the substrate 30. Thereafter, the biomolecular droplet 10 such as nucleic acids (e.g., probe DNA, RNA, PNA, and LNA), proteins (e.g., antigen and antibody), oligopeptides, saccharides, eukaryotic cells (e.g., human cells, animal cells, and vegetable cells), viruses, and bacteria is supplied to the accommodating area 22 of the electric field forming electrode 20. The inner diameter of the outlet 23 of the electric field forming electrode 20 is very small, and thus the biomolecular droplet 10 overcomes gravity and is suspended from the outlet 23 due to surface tension when an outside force is not applied.

After the biomolecular droplet 10 is supplied to the accommodating area 22 as described above, the open circuit type voltage applying unit 50 simultaneously applies the DC voltage in the range of 5 to 100,000 V and the AC voltage in the range of 5 to 100,000 V with a frequency of 10 to 1,000 Hz to the electric field forming electrode 20. As a result, positive charges migrate into the biomolecular droplet 10 suspended from the outlet 23, and thus negative charges are induced in the substrate 30, which is grounded. Accordingly, an electric field is generated between the positive charges and the negative charges, as illustrated in FIG. 5.

When the positive charges migrate into the biomolecular droplet 10, and thus the negative charges are induced in the portion of the substrate 30 facing the biomolecular droplet 10, the Coulomb force is generated between the positive charges and the negative charges. Since the negative charges are disposed in a portion of the substrate 30 facing the biomolecular droplet 10, the Coulomb force is concentrated in the portion of the substrate 30 directly below the biomolecular droplet 10. The biomolecular droplet 10 suspended from the outlet 23 flows to the substrate 30 due to the Coulomb force, and thus has a neck shape, as illustrated in FIGS. 6 and 7. Accordingly, the positive charges in the biomolecular droplet 10 recombine with the negative charges in the substrate 30, thereby decreasing the Coulomb force. That is, the Coulomb force acting on the biomolecular droplet 10 suspended from the outlet 23 decreases. Referring to FIG. 7, when the biomolecular droplet 10 has a neck shape, the surface tension A of a portion of the biomolecular droplet 10 contacting the substrate 30 and the surface tension B of a portion of the biomolecular droplet 10 contacting the electric field forming electrode 20 are in opposite directions. Since the Coulomb force decreases due to the recombination of the positive and negative charges, and the surface tensions A and B acting on the biomolecular droplet 10 are in opposite directions, the biomolecular droplet 10 separates at the neck into two biomolecular droplets. Therefore, a biomolecular droplet is dropped and deposited onto the substrate 30, as illustrated in the last photograph of FIG. 6.

In the conventional art using an electro-hydrodynamic effect, a substrate should be made of a conductive material or an electric field forming electrode made of a conductive material should be disposed on the substrate. However, in the present embodiment, the material composing the substrate 30 is not limited because the substrate 30 is grounded.

In addition, since negative charges are induced in the portion of the substrate directly below the biomolecular droplet due to positive charges in the biomolecular droplet, and more positive charges are in the biomolecular droplet than in the conventional art due to an electro-hydrodynamic effect, the biomolecular droplet 10 can be dropped and deposited onto a desired position of the target surface.

In the present embodiment, since the Coulomb force is very high as described above, a biomolecular droplet with small size and volume, for example, in units of picoliters, is dropped onto the target surface of the substrate, and the time required to drop the biomolecular droplet is shorter than in the conventional art.

Since the substrate is grounded, electric discharge does not occur, unlike in the conventional art using the electro-hydrodynamic effect, thus allowing the distance between the electric field forming electrode and the substrate 30 to be decreased. Thus, the volume of the biomolecular droplet dropping onto substrate can be desirously controlled, thereby providing a wider margin in the design of the printing device.

When the substrate 30 includes a plurality of target surfaces 31, the biomolecular droplets 10 are be printed on each of the target surface 31, and more biomolecular droplets 10 can be printed on the substrate 30 with the printing device according to embodiments of the present than with the conventional printing device. Thus, a high density biochip can be easily manufactured.

In order to quantitatively confirm that the biomolecular droplet 10 can be printed with drops smaller in size and volume than in the conventional art, the following experiment was conducted.

100 $\mu$M DNA in a buffer solution with pH 10 was used as the biomolecular droplet 10, and the electric field forming electrode 20 having a diameter of 0.46 mm and the substrate 30 made of glass were prepared. The distance between the substrate 30 and the electric field forming electrode 20 was 250 $\mu$m. A DC voltage of 2000 V and an AC voltage of 500 V at a frequency of 130 Hz were simultaneously applied to the electric field forming electrode 20. The size and volume of the biomolecular droplet 10 dropped onto the substrate 30 and the time taken for the dropping were measured. The resolution for the measurement of the size and volume was 1.7 $\mu$m/pixel. The experiment was made ten times, and then the average and standard deviation thereof were calculated. The average volume of the biomolecular droplet 10 dropped onto the substrate 30 was 83.7 picoliters, and the standard deviation thereof was 9.0 picoliters. The average time taken for dropping the biomolecular droplet 10 was 0.23 seconds and the standard deviation thereof was 0.11 seconds. The average size of the biomolecular droplet 10 deposited onto the substrate 30 was 45 $\mu$m.

100 $\mu$M DNA in a buffer solution with pH 10 was used as the biomolecular droplet 10, and the electric field forming electrode 20 having a diameter of 0.46 mm and the substrate 30 coated with PMMA were prepared. The distance between the substrate 30 and the electric field forming electrode 20 was 200 $\mu$m. A DC voltage of 2000 V and an AC voltage of 500 V with a frequency of 130 Hz were simultaneously applied to the electric field forming electrode 20. The size and volume of the biomolecular droplet 10 dropped onto the substrate 30 and the time taken for the dropping were measured. The resolution for the measurement of the size and volume was 1.7 $\mu$m/pixel. The experiment was repeated ten times, and then the average and standard deviation thereof were calculated. The average volume of the biomolecular droplet 10 dropped on the substrate 30 was 2.6 picoliters, and the standard deviation thereof was 0.9 picoliters. The average time taken to drop the biomolecular droplet 10 was 0.13 seconds and the standard deviation thereof was 0.03 seconds. The average size of the biomolecular droplet 10 deposited onto the substrate 30 was 13 $\mu$m.

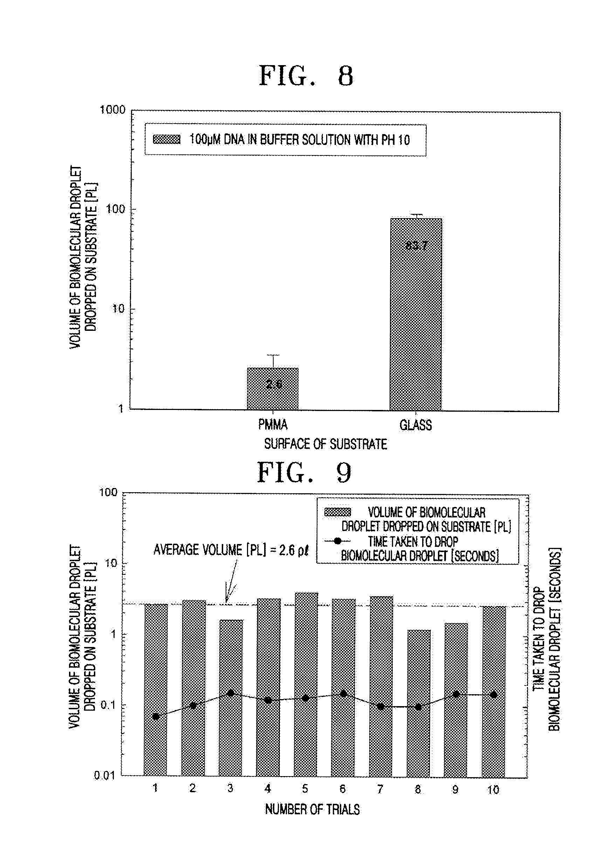

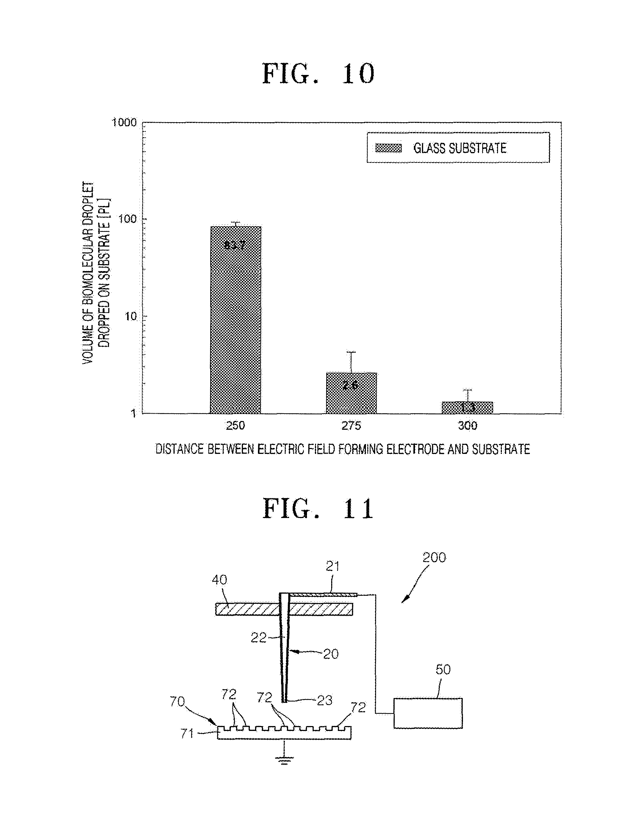

FIG. 8 is a graph illustrating the volume of the biomolecular droplet 10 deposited on the substrate 30 made of glass or coated with PMMA in the printing device 100 of FIG. 3. FIG. 9 is a graph illustrating the average volume of the biomolecular droplet 10 deposited on the substrate 30 coated with PMMA and the average time taken to drop the biomolecular droplet 10 in the printing device 100 of FIG. 3. FIG. 10 is a graph illustrating the relationship between the distance between the electric field forming electrode 20 and the glass substrate 30 and the volume of the biomolecular droplet 10 dropped from the outlet 23 in the printing device 100 of FIG. 3.

The above-described tests were respectively repeated ten times when the distance between the glass substrate 30 and the electric field forming electrode 20 was 275 and 300 $\mu$m. When the distance between the glass substrate 30 and the electric field forming electrode 20 was 275 $\mu$m, the average volume of the biomolecular droplet 10 was 2.6 picoliters. When the distance between the glass substrate 30 and the electric field forming electrode 20 was 300 $\mu$m, the average volume of the biomolecular droplet 10 was 1.3 picoliters. As the distance between the glass substrate 30 and the electric field forming electrode 20 increased, the volume of the biomolecular droplet 10 dropped on the glass substrate 30 decreased. Accordingly, the volume of the biomolecular droplet 10 dropped on the glass substrate 30 can be controlled by controlling the distance between the glass substrate 30 and the electric field forming electrode 20.

In the above-described embodiment, the surface of the substrate 30 is flat, and only one target surface 31 is formed on the substrate 30. However, in a device 200 for printing a biomolecular droplet using an electric charge concentration effect according to another embodiment of the present invention illustrated in FIG. 11, a plurality of protrusions 72 may be formed on a substrate 70, and the protrusions 72 may be target surfaces. As illustrated in FIG. 11, the substrate 70 includes a planar layer 71 and the plurality of protrusions 72 protruding upwards from the planar layer 71. The pitches between adjacent protrusions 72 are equal to each other. Each of the protrusions 72 is a target surface 31 onto which a biomolecular droplet is discharged via an outlet 23 of an electric field forming electrode 20. The substrate 70 is installed on a stage 90 and the stage 90 may be moved by, for example, a conveyor belt.

In the device 200, a separate driving device (not illustrated) is driven to move a printer body 40 so that the electric field forming electrode 20 is disposed directly above one of the protrusions 72 onto which the biomolecular droplet 10 is to be printed. Thereafter, AC and DC voltages are applied to the electric field forming electrode 20 to drop the biomolecular droplet 10 onto the protrusions 72 of the substrate 70. The driving device is again driven to move the printer body 40 to dispose the electric field forming electrode 20 directly above another protrusion 72 to print the biomolecular droplet 10 by applying AC and DC voltages again to the electric field forming electrodes 20. The biomolecular droplet 10 can be dropped and deposited onto all of the protrusions 72 by repeatedly moving the printer body 40 as described above.

When a fragment of a target DNA to be analyzed is applied to a biochip or a DNA microarray manufactured by printing the biomolecular solution onto all of the protrusions 72 as described above, an experimenter may observe hybridization of the target DNA and the biomolecular droplet 10 formed on each of the protrusions 72 using, for example, an optical method or a radiochemical method, since the protrusions 72 are separated from one another by indentations between the protrusions 72. As a result, the nucleotide sequences of the target DNA can be more accurately analyzed.

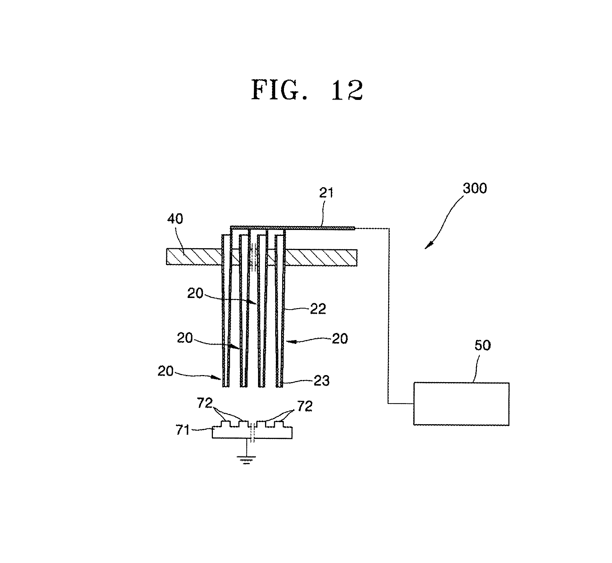

The device 200 illustrated in FIG. 11 includes one electric field forming electrode 20, which is three-dimensionally moved by a separate driving device to print the biomolecular droplet 10 onto each of the protrusions 72. However, a device 300 can be constructed as illustrated in FIG. 12. Referring to FIG. 12, in the device 300 for printing a biomolecular droplet onto a substrate 70 using an electric charge concentration effect, a plurality of electric field forming electrodes 20 may be disposed to correspond to protrusions 72 of the substrate 70. The electric field forming electrodes 20 have the same pitch as the protrusions 72 of the substrate 70, and the protrusions 72 correspond to each of the electric field forming electrodes 20. The electric field forming electrodes 20 are electrically connected to one another, and one of the electric field forming electrodes 20 is electrically connected to an open circuit type voltage applying unit 50 via an electrode lead wire 21. Therefore, when the open circuit type voltage applying unit 50 is driven, a voltage is applied to all of the electric field forming electrodes 20.

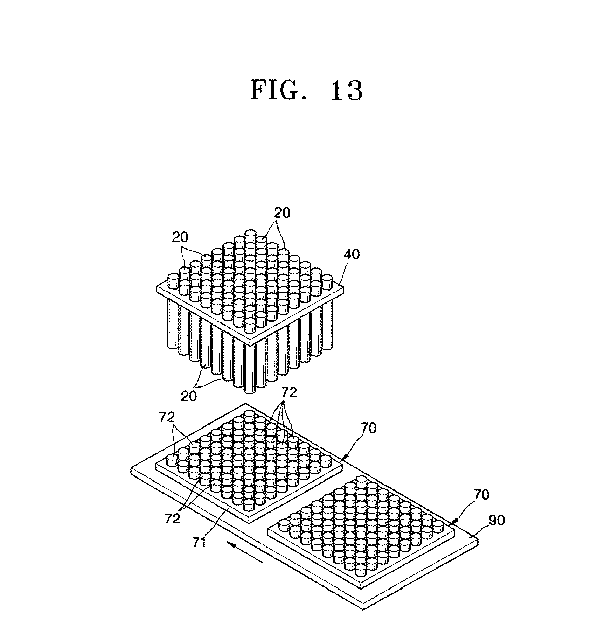

The device 300 is especially useful when simultaneously printing different types of biomolecular droplets. FIG. 13 is a schematic perspective view illustrating printing of the biomolecular droplet onto the substrate 70 using the device 300 illustrated in FIG. 11 to manufacture a plurality of silicon substrates (e.g., biochips or DNA microarrays) using the electric charge concentration effect. As illustrated in FIG. 13, when the printing of biomolecular droplets onto the silicon substrate 70 is completed, the stage 90 supporting the substrate 70 is automatically moved. As a result, the biomolecular droplets can be continuously printed onto another substrate 70.

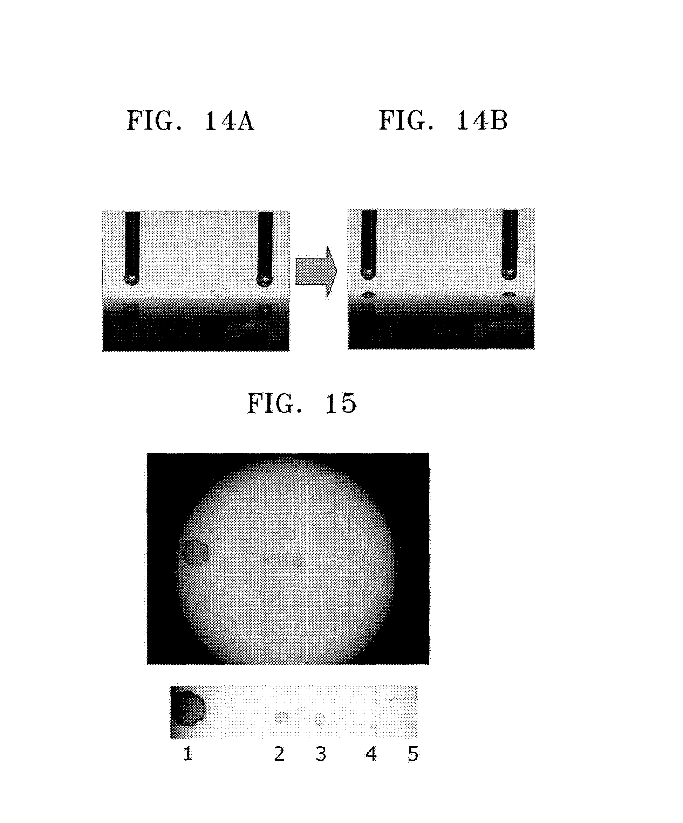

Experimental tests were performed using the printing device 300 having two of the electric field forming electrodes 20. The printing device 300 for printing a biomolecular droplet included the pair of electric field forming electrodes 300 having a diameter of 460 μm and a planar substrate coated with PMMA. The electric field forming electrodes 20 were separated by 3.7 mm and the outlets 23 of the electric field forming electrodes 20 were separated from the substrate 70 by 787 μm. 100μM DNA in a buffer solution with pH 10 was supplied to the electric field forming electrodes 20 to suspend DNA in the outlet 23, as illustrated in FIG. 14A. Then, a DC voltage of 2000 V and an AC voltage of 500V with a frequency of 100 Hz were applied to the electric field forming electrodes, thereby simultaneously printing two biomolecular droplets 10 onto the substrate 70, as illustrated in FIG. 14B. The volumes of the biomolecular droplets were measured with a resolution of 8.2 μm/pixel. The volumes of the biomolecular droplets were respectively 10.8 and 9.8 nanoliters.

In the above-described embodiments, the device for printing only a biomolecular droplet on a substrate has been described . However, when the electric charge concentration effect is used, a device for printing ink on a sheet of print paper or a print substrate, like the above-described device, can be used. In addition, a color filter for a display can be manufactured by dropping print ink on a glass substrate for a color filter using the electric charge concentration effect.

Referring to FIGS. 3, 11, and 12, when ink is filled in the accommodating area 22 of the electric field forming electrode 20 instead of biomolecules, and a sheet of print paper or a print substrate 30 instead of the glass substrate is grounded, AC and DC voltages are simultaneously applied to the electric field forming electrode 20 such that positive charges migrate into the ink suspended from the outlet 23 of the electric field forming electrode 20 and negative charges are induced in a portion, i.e., a target surface 31, of the sheet of print paper or the print substrate 30 directly below the ink. A Coulomb force is generated between the positive charges in the ink and the negative charges in the target surface 31, and the ink suspended from the outlet 23 is dropped onto the target surface 31 due to the Coulomb force. Unlike conventional inkjet typed or laser typed printers, the device using the electric charge concentration effect can accurately print contents of computer document files or photographic files.

Experimental tests were performed to verify that small volumes of ink could be printed using the electric charge concentration effect. An electric field forming electrode in the device had a diameter of 460 μm and A4 sized print paper was prepared. The outlet of the electric field forming electrode and the print paper were separated by an appropriate distance, for example, 300-1500 μm. Blue ink was filled in the electric field forming electrode. A DC voltage of 2000 V and an AC voltage of 500 V with a frequency of 100 Hz were simultaneously applied to the electric field forming electrode, thereby printing the blue ink on the print paper. The sizes of blue ink droplets printed on the print paper were measured with a resolution of 30 pm/pixel. In the test, the sizes of the blue ink droplet suspended from the outlet of the electric field forming electrode were varied, and thus the sizes of the printed blue ink were also varied. Measurements were made for each ink droplet printed. The printing patterns of the blue ink are illustrated in FIG. 15, and the diameters of the blue ink dots are 837, 344, 300, 159, and 79 μm, resptectively, from the left to right in FIG. 15. The times for printing the blue ink were 0.2 and 0.5 seconds for the blue ink dots with diameters of 837 and 79 μm, respectively. That is, the size of the blue ink can be controlled, and the time required to print the blue ink increases as the size of the blue ink decreases.

While the present invention has been particularly shown and described with reference to exemplary embodiments thereof, the invention should not be construed as being limited to the embodiments set forth herein; rather, these embodiments are provided so that this disclosure will be thorough and complete, and will fully convey the concept of the invention to those skilled in the art.

For example, the printer body is included in the embodiments of the present invention described in the detailed description, but the printer body is not necessary.

In addition, AC and DC voltages are simultaneously applied to electric field forming electrodes in the embodiments of the present invention described in the detailed description, but only one of the AC and DC voltages may be applied to the electric field forming electrode.

The positive charges migrate into the biomolecular droplet and the negative charges are induced in the substrate in the embodiments of the present invention described in the detailed description. However, if negative charges migrate into the biomolecular droplet and positive charges are induced in a portion of substrate directly below the biomolecular droplet due to the negative charges, the Coulomb force is still generated between the negative charges and the positive charges, thereby causing the biomolecular droplet to drop onto the substrate by the Coulomb force.

The substrate includes the planar layer and the plurality of protrusions in some of the embodiments of the present invention described in the detailed description, but the substrate may include only the planar layer.

According to the present invention, the device for printing biomolecules on a substrate using the electric charge concentration effect enables the limitation of the material and surface characteristics of a substrate to be overcome, enables the accurate dropping of a biomolecular droplet onto a desired position of a target surface of the substrate, prevents electric discharge, thereby providing more control of the distance between an electric field forming electrode thereof and the substrate, and allows the manufacturing of a high density biochip by depositing numerous biomolecular droplets small in size and volume onto a substrate.

It will be understood by those of ordinary skill in the art that various changes in structure and arrangement may be made therein without departing from the spirit and scope of the present invention as defined by the following claims.

**Claims**

1.  A device for printing a biomolecular droplet onto a substrate using an electric charge concentration effect, the device comprising:

    an electric field forming electrode that is needle-shaped, is made of a conductive material, is disposed vertically, and comprises:

    an accommodating area in which the biomolecular droplet is accommodated; and
    an outlet formed on a bottom end of the accommodating area through which the biomolecular droplet is discharged;

    a substrate that is disposed below the electric field forming electrode, is grounded, and includes a target surface onto which the biomolecular droplet discharged from the outlet of the electric field forming electrode is deposited; and
    an open circuit type voltage applying unit which is electrically connected to the electric field forming electrode and supplies first electric charges to the electric field forming electrode so that the biomolecular droplet drops onto the target surface of the substrate due to the Coulomb force generated by the first electric charges in the electric field forming electrode and second electric charges induced by the first electric charges on the substrate.

2.  The apparatus of claim 1, wherein the biomolecular droplet comprises a biomolecular material selected from the group consisting of nucleic acids, proteins, oligopeptides, saccharides, eukaryotic cells, viruses, and bacteria.

3.  The apparatus of claim 1, further comprising:

    a printer body that is disposed above the outlet of the electric field forming electrode and supports the electric field forming electrode.

4.  The apparatus of claim 1, further comprising electrode lead wires that are connected to a top end of the electric field forming electrode, and electrically connect the electric field forming electrode and the open circuit type voltage applying unit.

5.  The apparatus of claim 1, wherein the voltage applying device simultaneously applies AC and DC voltages to the electric field forming electrode to generate the electric field below the biomolecular droplet suspended from the outlet.

6.  The apparatus of claim 5, wherein the DC voltage is in the range of 5 to 100,000 V and the AC voltage is in the range of 5 to 100,000 V.

7.  The apparatus of claim 6, wherein the DC voltage is in the range of 500 to 10,000 V and the AC voltage is in the range of 500 to 10,000 V.

8.  The apparatus of claim 6, wherein the AC voltage has a frequency of 10 to 1,000 Hz.

9.  The apparatus of claim 7, wherein the DC voltage is 2,000 V, and the AC voltage is 500 V and has a frequency of 130 Hz.

10. The apparatus of claim 1, wherein the substrate is made of at least one material selected from the group consisting of silicon, glass, or polymer.

11. The apparatus of claim 10, wherein the surface of the substrate is coated using at least one material selected from the group consisting of an amine group, a carboxyl group, streptavidine, biotin, thiol, and poly-L-lysine such that the biomolecular droplet can be deposited.

12. The apparatus of claim 1, wherein the substrate comprises:

a planar layer; and
a plurality of protrusions protruding upwards from the planar layer,
wherein each of the protrusions is a target surface of the substrate.

13. The apparatus of claim 1, wherein the substrate is disposed perpendicular to the electric field forming electrode.

14. The apparatus of claim 1, wherein the electric field forming electrode is made of at least one material selected from the group consisting of conductive metals, conductive polymers, and indium-tin oxide glass.

15. The apparatus of claim 1, wherein the area around the outlet of the electric field forming electrode is hydrophobic-treated.

16. The apparatus of claim 1, wherein there are a plurality of the electric field forming electrodes arranged at regular intervals, a plurality of the target surfaces are formed on the substrate, and the target surfaces have the same pitch as the electric field forming electrodes and respectively correspond to the electric field forming electrodes.

17. A method of printing a biomolecular droplet on a substrate using an electric charge concentration effect, the method comprising:

vertically disposing an electric field forming electrode that is needle-shaped, is made of a conductive material, and comprises:

an accommodating area in which the biomolecular droplet is accommodated; and
an outlet formed at a bottom end of the accommodating area through which the biomolecular droplet is discharged;

disposing a substrate below the electric field forming electrode, wherein the substrate is grounded and includes a target surface onto which the biomolecular droplet discharged from the outlet of the electric field forming electrode is deposited;
disposing an open circuit type voltage applying unit which is electrically to the electric field forming electrode;
supplying a biomolecular droplet of a biomolecular material selected from the group consisting of nucleic acids, proteins, oligopeptides, saccharides, eukaryotic cells, viruses, and bacteria to the accommodating area of the electric field forming electrode; and
separating the biomolecular droplet when an open circuit type voltage applying unit applies a voltage to the electric field forming electrode so that the biomolecular droplet drops onto the target surface of the substrate due to the Coulomb force generated by first electric charges in the electric field forming electrode and second electric charges induced by the first electric charges in the substrate.

18. A device for printing ink on a sheet of print paper or a print substrate using an electric charge concentration effect, the device comprising:

an electric field forming electrode that is needle-shaped, is made of a conductive material, is disposed vertically, and comprises:

an accommodating area in which the ink is accommodated; and
an outlet formed at a bottom end of the accommodating area through which the ink is discharged;

the sheet of print paper or the print substrate that is disposed below the electric field forming electrode, is grounded, and includes a target surface onto which the ink discharged from the outlet of the electric field forming electrode is deposited; and
an open circuit type voltage applying unit which is electrically connected to the electric field forming electrode and supplies first electric charges to the electric field forming electrode so that the biomolecular droplet drops onto the target surface of the sheet of print paper or the print substrate due to the Coulomb force generated by the first electric charges in the electric field forming electrode and second electric charges induced by the first electric charges in the print paper or the print substrate.

EP 1 759 759 A1

FIG. 1 (PRIOR ART)

FIG. 2 (PRIOR ART)

13

# FIG. 3

# FIG. 4

EP 1 759 759 A1

# FIG. 5

# FIG. 6

15

FIG. 7

# FIG. 8

# FIG. 9

# FIG. 10

# FIG. 11

# FIG. 12

# FIG. 13

FIG. 14A          FIG. 14B

FIG. 15

**European Patent Office**

**EUROPEAN SEARCH REPORT**

Application Number

EP 06 11 8668

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 01/71311 A2 (NANOSTREAM INC [US]) 27 September 2001 (2001-09-27) * abstract * * page 3, line 21 - line 29 * * page 4, line 8 - line 29 * * page 6, line 13 - line 29 * * page 7, line 12 - line 30 * * page 8, line 13 - line 25 * * page 9, line 3 - page 10, line 11 * * page 12, line 11 - line 20 * * page 14, line 4 - line 24 * * page 17, line 16 - line 24 * * page 21, line 3 - line 23 * * page 22, line 14 - line 17 * * figure 1a * | 1-18 | INV. B01J19/00 B01L3/02 |
| X | YOGI O ET AL: "ON-DEMAND DROPLET SPOTTER FOR PREPARING PICO- TO FEMTOLITER DROPLETS ON SURFACES" 15 April 2001 (2001-04-15), ANALYTICAL CHEMISTRY, AMERICAN CHEMICAL SOCIETY. COLUMBUS, US, PAGE(S) 1896-1902 , XP001030287 ISSN: 0003-2700 * abstract * * page 1897, right-hand column, paragraph 3 * * page 1898, left-hand column, paragraph 2 - page 1900, left-hand column, paragraph 1; figure 1 * | 1-18 | |

TECHNICAL FIELDS SEARCHED (IPC)

B01J
B01L
B41J
C40B

-/--

The present search report has been drawn up for all claims

| Place of search | Date of completion of the search | Examiner |
|---|---|---|
| Munich | 27 October 2006 | Nazario, Luis |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

**European Patent Office**

# EUROPEAN SEARCH REPORT

Application Number

EP 06 11 8668

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | MOERMAN R ET AL: "MINIATURIZED ELECTROSPRAYING AS A TECHNIQUE FOR THE PRODUCTION OF MICROARRAYS OF REPRODUCIBLE MICROMETER-SIZED PROTEIN SPOTS" 2001, ANALYTICAL CHEMISTRY, AMERICAN CHEMICAL SOCIETY. COLUMBUS, US, PAGE(S) 2183-2189 , XP001133706 ISSN: 0003-2700 * abstract * * page 2184, right-hand column, paragraph 3 - page 2185, left-hand column, paragraph 4 * * page 2185, left-hand column, paragraph 7 - paragraph 10; figures 1,2 * | 1-18 | |
| X | US 2002/092366 A1 (BROCK ANSGAR [US] ET AL) 18 July 2002 (2002-07-18) * abstract * * paragraph [0012] * * paragraph [0022] - paragraph [0025] * * paragraph [0040]; figures 1,4 * | 1-18 | |
| X | WO 00/62934 A (ORCHID BIOSCIENCES INC [US]) 26 October 2000 (2000-10-26) * abstract * * page 2, line 23 - page 3, line 28 * * page 6, line 4 - line 19 * * page 17, line 1 - line 13; claims * | 1-18 | TECHNICAL FIELDS SEARCHED (IPC) |
| X | US 5 539 440 A (HIGUCHI KAZUHIKO [JP] ET AL) 23 July 1996 (1996-07-23) * abstract * * column 9, line 28 - column 10, line 8; figure 3 * | 1-16,18 | |

-/--

The present search report has been drawn up for all claims

| Place of search | Date of completion of the search | Examiner |
|---|---|---|
| Munich | 27 October 2006 | Nazario, Luis |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

**European Patent Office**

## EUROPEAN SEARCH REPORT

Application Number

EP 06 11 8668

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | EP 1 552 887 A2 (SAMSUNG ELECTRONICS CO LTD [KR]) 13 July 2005 (2005-07-13)<br>* abstract *<br>* paragraph [0038] - paragraph [0043] *<br>* claims; figures *<br>----- | | |
| | | | **TECHNICAL FIELDS SEARCHED (IPC)** |

The present search report has been drawn up for all claims

| Place of search | Date of completion of the search | Examiner |
|---|---|---|
| Munich | 27 October 2006 | Nazario, Luis |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 06 11 8668

This annex lists the patent family members relating to the patent documents cited in the above-mentioned European search report.
The members are as contained in the European Patent Office EDP file on
The European Patent Office is in no way liable for these particulars which are merely given for the purpose of information.

27-10-2006

| Patent document cited in search report | | Publication date | Patent family member(s) | | Publication date |
|---|---|---|---|---|---|
| WO 0171311 | A2 | 27-09-2001 | AU | 4754401 A | 03-10-2001 |
| US 2002092366 | A1 | 18-07-2002 | CA | 2434305 A1 | 15-08-2002 |
| | | | EP | 1358012 A1 | 05-11-2003 |
| | | | JP | 2004529325 T | 24-09-2004 |
| | | | WO | 02062475 A1 | 15-08-2002 |
| | | | US | 2005232823 A1 | 20-10-2005 |
| WO 0062934 | A | 26-10-2000 | AU | 4350000 A | 02-11-2000 |
| | | | US | 6368562 B1 | 09-04-2002 |
| US 5539440 | A | 23-07-1996 | NONE | | |
| EP 1552887 | A2 | 13-07-2005 | CN | 1637155 A | 13-07-2005 |
| | | | JP | 2005195602 A | 21-07-2005 |
| | | | US | 2005214799 A1 | 29-09-2005 |

EPO FORM P0459

For more details about this annex : see Official Journal of the European Patent Office, No. 12/82

**EP 1 759 759 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 20050040162